# EUROPEAN PATENT SPECIFICATION

(11) **EP 4 047 496 B1**
(45) Date of publication and mention of the grant of the patent: **01.01.2025**
(21) Application number: 22157148.2
(22) Date of filing: 16.02.2022
(51) Int. Cl.: G06F 21/32, H04L 9/40, G06F 3/16, G10L 17/00, G10L 15/26

(54) **PROCESSING INPUT DATA**
VERARBEITUNG VON EINGANGSDATEN
TRAITEMENT DE DONNÉES D'ENTRÉE

(30) Priority: 17.02.2021 GB 202102251; 19.10.2021 GB 202114905
(43) Date of publication of application: 24.08.2022
(73) Proprietor: ValidSoft Limited, Dublin 2, 662881 (IE)
(72) Inventor: CARROLL, Patrick Matthew, 662881 Dublin 2 (IE); PETERSEN, John, 662881 Dublin 2 (IE); KORFF, Alexander, 662881 Dublin 2 (IE)
(74) Representative: Marks & Clerk LLP

(56) References cited:
- WO-A1-2020/192890
- US-A1- 2012 245 941
- US-A1- 2018 293 975
- US-B1- 10 803 859
- US-B1- 8 543 834

## Description

### CROSS-REFERENCE TO RELATED APPLICATIONS

This application is based upon and claims the benefit of priority from prior United Kingdom Patent Application number 2102251.2 filed on 17 February 2021 and from prior United Kingdom Patent Application number 2114905.9 filed on 19 October 2021.

### FIELD

This invention relates to a method of processing input data by a server, a server for processing input data, and a system for verifying input data. For example, this invention may relate to the detection of corrupted/altered online transactions caused by Man-in-the-Middle (MitM) or Man-in-the-Browser (MitB) attacks.

### BACKGROUND

Man-in-the-Middle (MitM), and Man-in-the-Browser (MitB), are forms of internet threat, or malware, which target online interactions between a user and a service provider. The attacks intercept transmissions of data sent from a user device to a device of a service provider and alter the data, for example by replacing information with new information. The new information is then transmitted to the service provider device, without either the user device or the service provider device being aware. The data most vulnerable to this sort of attack is structured data.

This form of attack also bypasses any two-factor authentication provided by the service provider by presenting unaltered information to the user while presenting altered information to the service provider; the user therefore authenticates the requested action, unaware that the details of the action have been changed.

A MitM attack operates through the use of a proxy server between the user and the service provider; the proxy server is arranged to intercept data exchange between the user and the service provider, controlling encryption and decryption of the messages and therefore having the access required to alter the data of the messages. The user is therefore unaware that their data has been changed.

A MitB attack comprises malware which resides in the browser itself, making changes to the data before encryption takes place, ensuring the service provider sees only the altered data, and then after decryption takes place, ensuring the user sees only the unaltered data.

Both methods of attack, MitM and MitB, rely on access to structured data formats of the messages, in order to alter appropriate data elements without alerting either the user or the service provider.

Detecting whether an attack has occurred typically requires the service provider to use a secondary, independent, channel, separate to the primary internet channel of the communications (such as SMS or phone call), to relay the communications as they have received it back to the user for confirmation. A further method is to provide the user with a hardware device, known as a signing token, to re-key certain communication data, in order to generate a value to be sent back to the service provider via the browser, thereby authenticating and protecting the communication.

The former technique uses Out-of-Band (OOB) whilst the latter uses encryption/signing. There are other less popular methods, such as hardened browsers, however these require special software and affect normal browser functionality. Until communication details are confirmed to be correct, the user is unable to authorise communication; the code for which is contained in the SMS or call or is generated by the signing token.

The drawbacks to OOB is that SMS messages and phone calls can both be intercepted by SIM Swap fraud, or by directly attacking the global telecommunications network protocol, SS7, itself; successful attacks of this nature have been verified. Authorisation codes can be stolen to authorise communications created by untrustworthy third parties, rather than genuine users. The calls and messages also cost the service providers money and resources.

The drawback to signing tokens is that they are expensive, the rekeying is error-prone, they are inconvenient and they are limited to a single service provider (they cannot be shared). The invention addresses how to securely authenticate a user and thereby detect any alteration of transaction detail or injection of transactions, without having to use secondary, OOB, channels or any form of signing devices.

In United States Patent US10803859 B1, there is described a speech-processing system capable of receiving spoken commands from a public or semi-public voice controlled device and determine a user who spoke the command for purposes of both command execution and output data routing. Identity of the user may be determined by various techniques such as facial identification, voice identification and the like. Identification techniques may be biased in view of users nearby to a voice controlled device. Private data resulting from the spoken command may be routed to a personal device of the user where non-private data may be output by the public voice controlled device.

In International Patent Application Publication WO2020/192890 A1 there is described a system that includes an interactive voice recognition module arranged to perform a speech conversation with a first user and receive a first user identifier, where the speech conversation has an interaction context based on a subject matter of the speech conversation. The system includes a datastore arranged to store a group of active words associated with the interaction context and store first user voiceprints derived from pre-captured audio of the first user, where each active word is selected based on one or more selection criterion derived from conversations of a population of users. An automated speech recognition module is arranged to perform speech recognition of the first user audio provided during the speech conversation. A voice biometric module is arranged to generate captured voiceprints and determine a similarity score based on comparisons of captured voiceprints with first user voiceprints.

In United States Patent Application Publication US2012/245941 A1 there is described a device that can be configured to receive speech input from a user. The speech input can include a command for accessing a restricted feature of the device. The speech input can be compared to a voiceprint (e.g., text-independent voiceprint) of the user's voice to authenticate the user to the device. Responsive to successful authentication of the user to the device, the user is allowed access to the restricted feature without the user having to perform additional authentication steps or speaking the command again. If the user is not successfully authenticated to the device, additional authentication steps can be request by the device (e.g., request a password).

In United States Patent US8543834 B1 there is described methods, systems, and apparatus for voice authentication and command. In an example, a method comprises: receiving, by a data processing apparatus that is operating in a locked mode, audio data that encodes an utterance of a user, wherein the locked mode prevents the data processing apparatus from performing at least one action; providing, while the data processing apparatus is operating in the locked mode, the audio data to a voice biometric engine and a voice action engine; receiving, while the data processing apparatus is operating in the locked mode, an indication from the voice biometric engine that the user has been biometrically authenticated; and in response to receiving the indication, triggering the voice action engine to process a voice action that is associated with the utterance.

In United States Patent Application Publication US2018/293975 A1 there is described a terminal that comprises: a speech receiving unit that receives speech in a locked state; a voiceprint authentication unit that performs voiceprint authentication based on the speech received in the locked state and determining whether or not a user is legitimate; a speech recognition unit that performs speech recognition of the speech received in the locked state; and an execution unit that executes an application using a result of the speech recognition.

### BRIEF SUMMARY OF THE DISCLOSURE

It is an aim of certain embodiments of the invention to solve, mitigate or obviate, at least partly, at least one of the problems and/or disadvantages associated with the prior art. Certain embodiments aim to provide at least one of the advantages described below.

According to a first aspect, there is provided a method of processing input data by a server, the method comprising:
initiating a web browser application or a mobile application;
receiving, at the server, speech data from a client device in response to a request from the web browser application or the mobile application for transaction information;
extracting structured input data from the speech data wherein the extracted structured input data is transaction information;
determining if the speech data corresponds to an authorised user; and
if the speech data corresponds to an authorised user, executing a transaction based on the extracted transaction information.

In an embodiment, if the determining that the speech data does not correspond to an authorised user, transmitting a message to the client device that indicates that the speech data may have been altered.

In an embodiment, extracting structured input data from the speech data comprises:
converting the speech data into text data; and
extracting the structured input data from the text data.

In an embodiment, determining if the speech data corresponds to an authorised user comprises:
Comparing a designated portion of the speech data to a prestored sample of the authorised user, wherein the designated portion corresponds to the transaction information;
confirming whether the designated portion of the speech data matches the prestored sample of the authorised user; and
if the designated portion of the speech data matches the prestored sample of the authorised user, determining that the speech data corresponds to the authorised user.

In an embodiment, the prestored sample comprises one or more reference phrases.

In an embodiment, the determining if the speech data corresponds to the authorised user is performed by a biometric authentication server.

In an embodiment, the biometric authentication server performs the determining if the speech data corresponds to the authorised user using Artificial Intelligence, Al, software.

In an embodiment, extracting the structured input data from the speech data is performed by a speech recognition server.

In an embodiment, the extracting the structured input data from the speech data is performed using speech recognition software.

In an embodiment, the web browser request is a HTTP request, a HTTPS request, a Web Socket request, a SIP request, a WebRTC request or a request according to some other protocol used to send data from a web browser to a web server.

In an embodiment, the mobile application request is a HTTP request, a HTTPS request, a FTP request, a Web Socket request, a SIP request, a WebRTC request or a request according to some other protocol used to send data from a mobile application to a server.

In an embodiment, the speech data is received in a request using an Internet protocol for transmitting data between an application running on a client device and a server, over TCP/IP connections.

In an embodiment, the method further comprises, if the speech data does not correspond to an authorised user, sending, to the client device, a notification that the input data may have been altered and that the process has not been executed.

In an embodiment, determining if the speech data corresponds to an authorised user comprises:
identifying one or more portions of the speech data as corresponding to one or more pre-determined text sequences;
identifying one or more portions of the speech data as corresponding to one or more new text sequences;
performing a voice authentication on a first portion of the speech data identified as corresponding to a first pre-determined text sequence and performing a separate voice authentication on a second portion of the speech data identified as corresponding to a new text sequence.

In an embodiment, the voice authentication performed on the first portion uses a stored voice template, and wherein the stored voice template corresponds to the first pre-determined text sequence.

In an embodiment, identifying the first portion comprises:
performing an automatic speech recognition process taking speech data as input and generating output text;
identifying a part of the output text comprising the first pre-determined text sequence;
identifying a portion of the speech data corresponding to the part of the output text as the first portion.

In an embodiment, identifying the one or more portions of the speech data as corresponding to one or more new text sequences comprises selecting one or more remaining portions of the speech data after the identification of one or more portions as corresponding to the one or more pre-determined text sequences.

In an embodiment, the one or more portions are identified as corresponding to the one or more pre-determined text sequences using one or more time periods corresponding to an expected time for speaking the one or more pre-determined text sequences.

According to a second aspect, there is provided a server for processing input data, the server configured to:
receive speech data from a client device;
extract structured input data from the speech data;
determine if the speech data corresponds to an authorised user; and
if the speech data corresponds to an authorised user, execute a process based on
the extracted structured input data.

In an embodiment, determining that the speech data does not correspond to an authorised user indicates that the speech data may have been altered.

In an embodiment, extracting structured input data from the speech data comprises:
converting the speech data into text data; and
extracting the structured input data from the text data.

In an embodiment, determining if the speech data corresponds to an authorised user comprises:
comparing the speech data to a prestored sample of the authorised user;
confirming whether the speech data matches the prestored sample of the authorised user; and
if the speech data matches the prestored sample of the authorised user, determining that the speech data corresponds to the authorised user.

In an embodiment, determining if the speech data corresponds to the authorised user further comprises:
transmitting the speech data to a biometric authentication server which performs the determining; and
receiving, from the biometric authentication server, an indication of whether the speech data matches the prestored sample of the authorised user.

In an embodiment, the determining is performed using Artificial Intelligence, Al, software.

In an embodiment, extracting the structured input data from the speech data further comprises:
transmitting the speech data to a speech recognition server which performs the extracting; and
receiving, from the speech recognition server, the text data.

In an embodiment, extracting the structured input data from the speech data is performed using speech recognition software.

In an embodiment, the speech data is received in a web browser request or a mobile application request.

In an embodiment, the method further comprises, if the speech data does not correspond to an authorised user, sending, to the client device, a notification that the input data may have been altered and that the process has not been executed.

According to a third aspect, there is provided a system for verifying input data, the system comprising the server and a client device configured to:
receive an input of speech data; and
transmit the speech data to the server.

Another aspect of the invention provides a computer program comprising instructions arranged, when executed, to implement a method in accordance with any one of the above-described aspects. A further aspect provides machine-readable storage storing such a program.

Another aspect comprises a carrier medium comprising computer readable code configured to cause a computer to perform the above methods. Since some methods in accordance with embodiments can be implemented by software, some embodiments encompass computer code provided on any suitable carrier medium. The carrier medium can comprise any storage medium such as a CD ROM, a magnetic device or a programmable memory device, or any transient medium such as any signal e.g. an electrical, optical or microwave signal. The carrier medium may comprise a non-transitory computer readable storage medium.

### BRIEF DESCRIPTION OF THE DRAWINGS

Embodiments of the invention are further described hereinafter with reference to the accompanying drawings, in which:
Figure 1 is a diagram showing an example of a Man in the Browser (MitB) plugin altering structured data transmitted by the client device;
Figure 2 is a diagram showing an example of a Man in the Middle (MitM) proxy altering structured data transmitted by a client device;
Figure 3 is a diagram showing an example of a client device sending unstructured data to a server;
Figure 4 is a diagram showing an example of a client device sending unstructured data to a server, which is then transmitted to and processed by a speech recognition server;
Figure 5 is a diagram showing an example of a client device sending unstructured data to a server, which is then transmitted to and processed by a speech recognition server and a biometric authentication server;
Figure 6 is a flowchart showing an example of a method carried out by a server upon receiving unstructured data from a client device;
Figure 7 is a diagram showing an example of a method carried out by a server, a biometric authentication server, and a speech recognition server upon the server receiving unstructured data from a client device;
Figure 8(a) is a flowchart showing an example of a method carried out by a server upon receiving unstructured data from a client device;
Figure 8(b) is a flowchart showing an example of a method carried out by a server upon receiving unstructured data from a client device; and
Figure 8(c) is a flowchart showing an example of a method of determining if the user corresponds to an authorised user based on the speech data which may be carried out as part of the method of Figure 8(b).

### DETAILED DESCRIPTION

A primary weakness of browser technology is the ability for malware to be introduced by browser plugins and extensions, which are also an essential, required component of how browsers work. Due to the underlying data being structured, the data can be detected and altered by malware because the malware only requires understanding of the structure of the data, which can be obtained easily.

Modern web browsers also support multi-media, including support for speech; a user is able to transmit voice commands through their browser. Various websites are configured to accept audio input. An example is described here based on an Internet banking website, which may operate in the following manner to process a payment. The user speaks the destination account number and amount of the payment when requested by the website. The web browser running on the client device includes this audio signal in a web browser request, for example a HTTPS request, and transmits the request to a server device hosting the website. The server processes the audio signal using automatic speech recognition (ASR) for example, and converts the audio signal into text for example. The server then processes the payment transaction according to the information in the text (i.e. the account number and amount). In this manner, the user is able to speak information directly to the web browser instead of using keyboard inputs or the like.

Various mobile applications also support multi-media, including support for speech; a user is able to transmit voice commands through the mobile application. An example may be a mobile banking app, which may operate in the following manner to process a payment. The user speaks the destination account number and amount of the payment when requested. The banking app running on the client device includes this audio signal in a request, for example a HTTPS request, and transmits the request to a server device hosting the mobile banking application. The server processes the audio signal using automatic speech recognition (ASR) for example, and converts the audio signal into text for example. The server then processes the payment transaction according to the information in the text (i.e. the account number and amount).

The invention enables users to speak required information directly to the browser for example instead of using keyboard inputs or the like. The resultant data of speech input from the user is unstructured, in contrast to the structured alphanumeric data which results from a keyboard input. Unstructured audio is much harder to alter in general and cannot be altered in as convincing a way as a structured data element can be altered.

It is possible that audio could theoretically be injected into the transmission of the audio by a MitM or MitB, containing instructions contrary to those intended by the user. However, by using continuous voice biometrics, the invention may authenticate the audio instructions as having been spoken by a genuine user. The MitM or MitB has no way of overcoming this; any recording other than that made by the user could not be used without it being detected and failing the authentication.

The unstructured audio, once received by the service provider, may be deciphered by speech recognition software, or Artificial Intelligence (Al) software, to extract the required information and put it into a structured format.

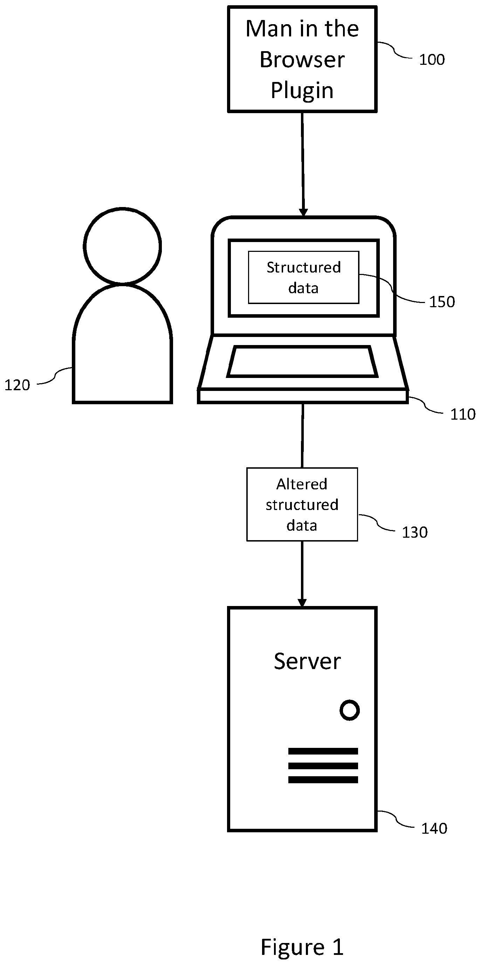

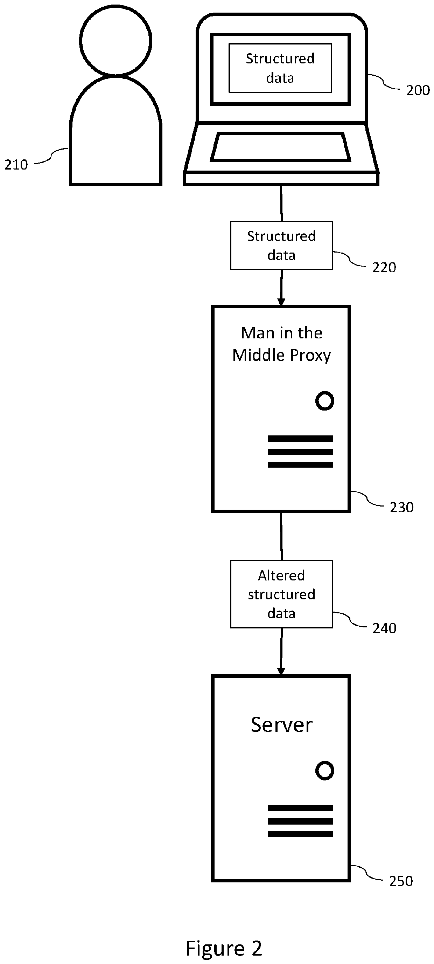

Figures 1 and 2 show the process of malware intercepting and altering structured data of a user in more detail.

Figure 1 is a diagram showing an example of a user 120 of a client device 110 requesting a server 140 to perform a process by inputting structured data 150 to be transmitted to the server 140 while unaware that their browser is host to a Man in the Browser (MitB) plugin 100. The MitB plugin 100 intercepts the structured data 150 and alters the data.

This altered structured data 130 is then transmitted from the client device 110 to the server 140 without the user 120 becoming aware that their data has been altered. The structured data 150 may be numerical data, text data, or the like.

The client device 110 may be a mobile phone or personal computer or the like. The MitB plugin 100 may not be a plugin but may instead be an unauthorised browser extension, patch, update, DOM object or the like.

The server 140 may then receive the altered structured data 130, accept the request, and perform a process based on the altered structured data 130.

The server 140 may transmit a message to the client device 110 in return, which may in turn be intercepted by the MitB plugin 100. The MitB plugin 100 may then alter the data received from the server 140 such that the client device 110 receives data that corresponds to the unaltered structured data that was previously intercepted by the MitB plugin 100.

The message transmitted from the server 140 to the client device 110 may be structured data 150. The structured data 150 may contain details of the process that was carried out, may be a confirmation of receipt of the structured data 150 of the client device 110, or the like.

The MitB plugin 100 may intercept the structured data 150 before encryption of the data may take place at the client device 110. The altered structured data 130 may then be encrypted by the client device 110, which remains unaware that the data has been altered, and may then be transmitted to the server 140. The server 140 may then transmit encrypted data back to the client device 110 which may decrypt the encrypted data. This decrypted data may be intercepted and altered by the MitB plugin 100 before the user 120 of the client device 110 gains access to the data such that the data corresponds to the original structured data 150 input by the user 120 of the client device 110.

Figure 2 is a diagram showing an example of a user 210 of a client device 200 requesting a server 250 to perform a process by inputting structured data 220 to be transmitted to a server 250 which is intercepted by a Man in the Middle (MitM) proxy server 230 before it reaches the server 250. The MitM proxy server 230 intercepts and alters the structured data 220 before transmitting the altered structured data 240 to the server 250. The alteration takes place without the user becoming aware that their data has been intercepted.

The server 250 may then receive the altered structured data 240 and perform the requested process based on the altered structured data 240.

The server 250 may transmit a message to the client device 200 in return, which may in turn be intercepted by the MitM proxy server 230. The MitM proxy server 230 may then alter the data received from the server 250 such that the client device 200 receives data that corresponds to the unaltered structured data 220 that was previously intercepted by the MitM proxy server 230.

The message transmitted from the server 250 to the client device 200 may be structured data 220. The structured data 220 may contain details of the process that was carried out, or may be a confirmation of receipt of the structured data 220 of the client device 200, or the like.

Embodiments of the present invention will now be described in the context of a server, or group of servers, configured to receive an unstructured data input from a client device and process it in order to determine whether the user who input the unstructured data is an authorised user as well as to extract structured data from the unstructured data in order to, if the user is the authorised user, execute a process requested by the user.

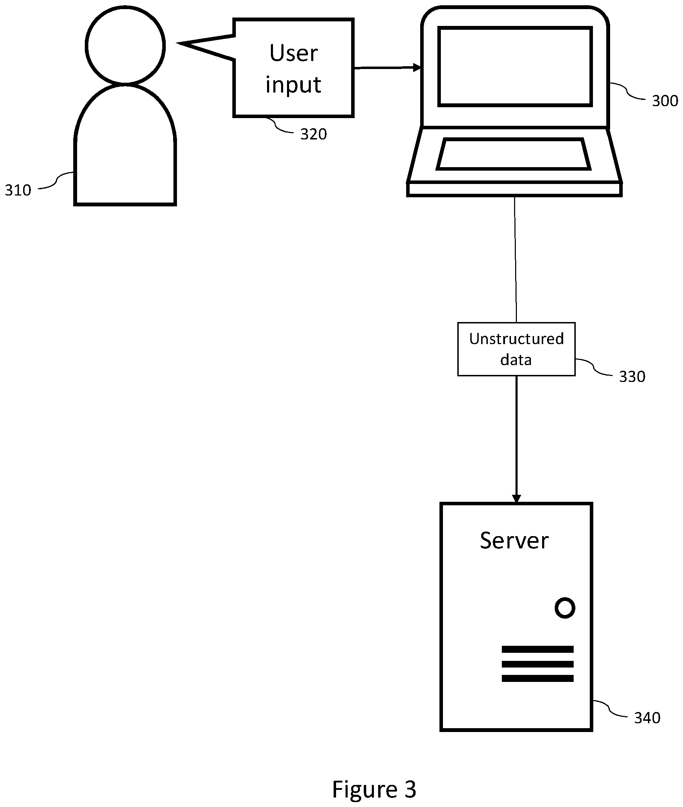

Figure 3 is a diagram showing an example of a user 310 of a client device 300 performing an input 320 of unstructured data 330 in order to request a server 340 to perform a process. The client device 300 may be a mobile phone or personal computer or the like. The client device 300 comprises a microphone (not shown). The microphone may be built into the client device 300 or coupled to the client device 300 by a wired or non-wired connection.

In contrast to the examples described with regard to Figures 1 and 2, the data which is input by the user 310 in Figure 3 is unstructured data rather than structured data. As such, although a MitB plugin or MitM proxy server may attempt to alter the unstructured data it may not be able to successfully alter the data such that it is not obvious that it has been altered. The altered unstructured data may be transmitted to the server 340 which may analyse the altered unstructured data, determine that the data has been altered and reject the request.

The unstructured data may be speech data of the voice of the user 210, an image of a handwriting input of the user 210, multimedia data of video of the user 210, or the like. For example, if the unstructured data were audio data of a speech input, the MitM 230 may insert computer-generated speech to replace part of the audio data which contains the information that the MitM 230 wishes to alter. Alternatively, the speech input may be altered via impersonation or the like.

A web browser runs on the client device 300. The web browser is a software application installed on the client device 300. The user 310 initiates the web browser application. The web browser application includes support for speech input for web pages programmed to receive speech input. Various websites are configured to accept audio input. An example is described here relating to an Internet banking website. The user accesses the Internet banking website through the web browser. In this example, the user speaks the destination account number and amount of the payment when requested by the Internet banking website. In other words, the user 310 speaks, and an audio signal is detected by the microphone. The audio signal detected by the microphone is then processed by the web browser application and sent to the server 340. For example, the web browser application includes the audio signal in a HTTP request, and sends the HTTP request to the server 340. Although a HTTP request is described here as an example, the audio signal may be transmitted over HTTPS, Web Socket, Session Initiation Protocol (SIP), WebRTC or some other web channel protocol.

The user 310 speaks the user input 330. The user input 330 may include an account number or payment amount relating to an online transaction for example. In this step, the user 310 inputs the unstructured data 330 which is received by the client device 300 and transmitted, by the client device 300, to the server 340. In this example, the unstructured data 330 is speech data, in other words an audio signal. Alternatively however, the unstructured data 330 may be a different sort of unstructured data such as an input, a video input, or the like. The client device 300 may transmit a file comprising the speech data. In this example, the client device 300 transmits a web browser request comprising the speech data. The client device 300 may transmit a transaction comprising the speech data. The speech data may relate to details of an online transaction, such as an online payment for example. In more detail, the web browser application running on the client device 300 includes the speech data, or audio signal, in a HTTP request and transmits the HTTP request including the speech data to the server 340. As explained above, the speech data may be transmitted in an HTTP request, HTTPS request, WebSocket request, SIP request, WebRTC request or a request according to some other protocol used to send data from a web browser to a server. The speech data is transmitted from the client device 300 and received at the server 340 through a web channel.

The unstructured data 330 is received at the server 340 in the request originating from the web browser. The server 340 determines whether the unstructured data 330 corresponds to an authorised user. To perform the determination, the server 340 may compare the unstructured data 330 to a prestored sample of unstructured data corresponding to the authorised user. Alternatively, any other method of authenticating the user may also be used. The sample may be input by the authorised user upon registration with a service provided by the server 340. The sample may be stored in a database of the server 340 or may be stored in an external server. The server 340 may use AI software to confirm whether the unstructured data matches the sample of the authorised user. Alternatively, for example, if the unstructured data 330 is speech data, the server 340 may use continuous voice biometrics to confirm whether the speech data matches the sample of the authorised data. The server 340 determines whether the unstructured data 330 corresponds to an authorised user. To perform the determination, the server 340 may compare the unstructured data 330 to a prestored sample of unstructured data corresponding to the authorised user, to determine whether the unstructured data matches the sample of the authorised user. In particular, it is determined whether the unstructured data corresponds to the same voice as the prestored sample. This may comprise using continuous voice biometrics to confirm whether the speech data corresponds to the same voice as the prestored sample or using AI software to confirm whether the speech data corresponds to the same voice as the prestored sample. For example, the unstructured data 330 is converted into a biometric model or template and compared with a pre-stored biometric model or template.

The server 340 may use continuous voice biometrics to confirm whether the entire speech data matches the sample of the authorised data. If the entire speech data matches the sample, then the server 340 determines that the user 310 corresponds to the authorised user. Determining that any part of the speech data does not match the sample is an indication that the unstructured data has been altered. For example, a portion of the unstructured data has been injected, added, modified, or replaced. For example, an alteration of a transaction detail or injection of transactions may have been made.

Alternatively, the server 340 may use continuous voice biometrics to confirm whether the entirety of a designated portion of the speech data matches the sample for example. If the entirety of a designated portion of the speech data matches the sample, then the server 340 determines that the user 310 corresponds to the authorised user. The server 340 determining that any part of the designated portion of the speech data does not match the sample is an indication that the unstructured data has been altered.

The designated portion of the speech data may be predefined such that the designated portion corresponds to speech data between predetermined time instants. Alternatively, the designated portion corresponds to speech data corresponding to predetermined structured data. For example, the designated portion may correspond to text data that relates to sensitive aspects of a transaction (for example account number or payment amount).

The server 340 also extracts structured input data from the unstructured data. For example, if the unstructured data is speech data, the server 340 may convert the speech data into text data, from which the structured input data can be extracted; it may be that the server 340 extracts information from the text data and then converts it into the structured input data. The structured input data may include instructions to be carried out by the server 340, numerical data, or the like. The server 340 processes the audio signal using automatic speech recognition (ASR) for example, and converts the audio signal into text for example. If it is determined by the server 340 that the user 310 corresponds to the authorised user, the server 340 executes the requested process based on the content of the structured input data. In other words, the server 340 processes the payment transaction according to the information in the text (i.e. the account number and amount). As explained above, unstructured audio is much harder to alter in general and cannot be altered in as convincing a way as a structured data element, such as text, can be altered. In this method, the transaction requested and the identity of the speaker is encoded in the same speech data. Structured data corresponding to the transaction request is extracted from the speech data. It is also determined whether the speech data corresponds to the authorised user. If the speech data does not correspond to the authorised user, this is detected. In this example, the critical information of the account number and payment amount were received as audio from the user, rather than being keyed in. This information is therefore transmitted as unstructured data. An ASR process performed at the server 340 extracts the critical information and puts it into a structured format for processing. By inputting and transmitting the transaction data as audio, voice biometrics can be used to make the transaction tamper-evident.

Additionally, if it has been determined that the user 310 is the authorised user and the process based on the content of the structured input data has been executed, the server 340 may transmit a message to the client device 300. The message may contain a confirmation of the identity of the user 310 and may also contain details of the process which was executed.

Additionally, if it has been determined that the user 310 is not the authorised user, the process based on the content of the structured input data is not executed. The server 340 may also transmit a message to the client device 300. The message may notify that the process, for example the transaction, has not been executed. The message may further notify that a potentially fraudulent transaction has been attempted. The message may notify that the input data may have been altered and that the process has not been executed.

Although in the above described example, an Internet banking website is described, it is understood that various websites and web pages across various sectors are configured to accept audio input. Furthermore, although in the above described example, a web browser runs on the client device 300 and transmits the speech data in a web server request to the server 340, alternatively a mobile application may be running on the client device 300 and transmit the speech data in a mobile application request to the server 340 for example. The mobile application is a software application designed to run on a mobile device, which is installed on the client device 300. The mobile application has Internet connectivity. The user 310 initiates the mobile application. The mobile application includes support for speech input. An audio signal detected by the microphone is processed by the mobile application and sent to the server 340. For example, the mobile application includes the audio signal in a HTTP request, and sends the HTTP request to the server 340. Although a HTTP request is described here as an example, the audio signal may be transmitted over HTTPS, FTP, Web Socket, Session Initiation Protocol (SIP), WebRTC or some other web channel protocol. The unstructured data 330 is received at the server 340 in the request originating from the mobile application.

The speech data may be received in a request using an Internet protocol for transmitting data between an application running on the client device and a server over TCP/IP connections. The application may be a web browser, mobile application or any other application with Internet connectivity for example.

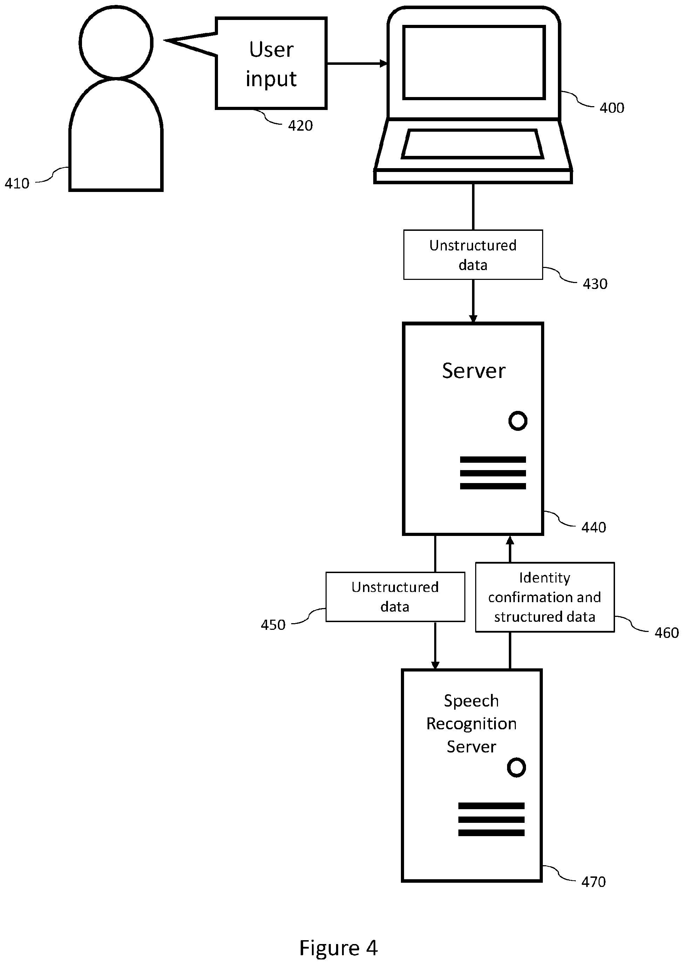

Figure 4 shows a diagram of an example of a user 410 of a client device 400 performing an input of unstructured data 430 in order to request a server 440 to perform a process.

The user 410 inputs the unstructured data 430 which is received by the client device 400 and is transmitted, by the client device 400, to the server 440. The unstructured data 430 may, for example, be speech data which is generated from a user's voice input. Alternatively, the unstructured data 430 may be a handwritten input, a video input, or any other kind of unstructured data input. The unstructured data 430 may be contained in a file. The unstructured data 430 may be contained in web browser request or a mobile application request as described above for example. The unstructured data 430 may be contained in a transaction. The unstructured data 430 may relate to details of an online transaction, for example.

The unstructured data 430 is transmitted by the server 440 to a speech recognition server 470. The speech recognition server may be a server or any other electronic device with the capability to process the unstructured data. Alternatively, the server 440 may transmit the unstructured data 430 to a biometric authentication server. The biometric authentication server may be a server or any other electronic device with the capability to process the unstructured data. Alternatively, the server 440 may not transmit the unstructured data 430 to any external device, as described with reference to Figure 3.

The speech recognition server 470 extracts structured input data from the unstructured data. To perform the extraction, for example, the speech recognition server 470 may convert speech data into text data, from which the structured input data can be extracted; it may be that the speech recognition server 470 extracts information from the text data and then converts it into the structured input data. The speech recognition server 470 may convert the speech data into text data using Artificial Intelligence (Al) software or may use speech recognition software. The structured input data may, for example, include instructions to be carried out by the server 440, numerical data, or the like.

The structured input data is transmitted by the speech recognition server 470 to the server 440.

The unstructured data 430 is also analysed by the server 440 in order to determine whether the user 410 who input the unstructured data 430 corresponds to an authorised user. For example, the unstructured data 430 may be speech data, in which case the speech data may be compared with a prestored sample of speech data of the authorised user. The sample may be recorded by the user upon registration with a service provided by the server 440. The sample may be stored in a database of the server 440 or may be stored in an external server. The server 440 may use continuous voice biometrics to confirm whether the speech data matches the sample of the authorised user.

The server 440 determines whether the unstructured data 430 corresponds to the authorised user. If the unstructured data 430 does not correspond to any authorised user, this may indicate that the unstructured data 430 has been tampered with by an unauthorised third party and the server 440 may refuse the request of the user 410 to perform the process. The server 440 may also transmit a message to the client device 400 of the user 410 indicating that the request has been declined. The message may also indicate to the user 410 of the client device 400 that the unstructured data 430 has been tampered with.

If it is determined by the server 440 that the user 410 corresponds to the authorised user, the server 440 executes the requested process based on the extracted content of the structured input data.

Additionally, if it has been determined that the user 410 is the authorised user and the process based on the content of the structured input data has been executed, the server 440 may transmit a message to the client device 400. The message may contain a confirmation of the identity of the user 410 and may also contain details of the process which was executed.

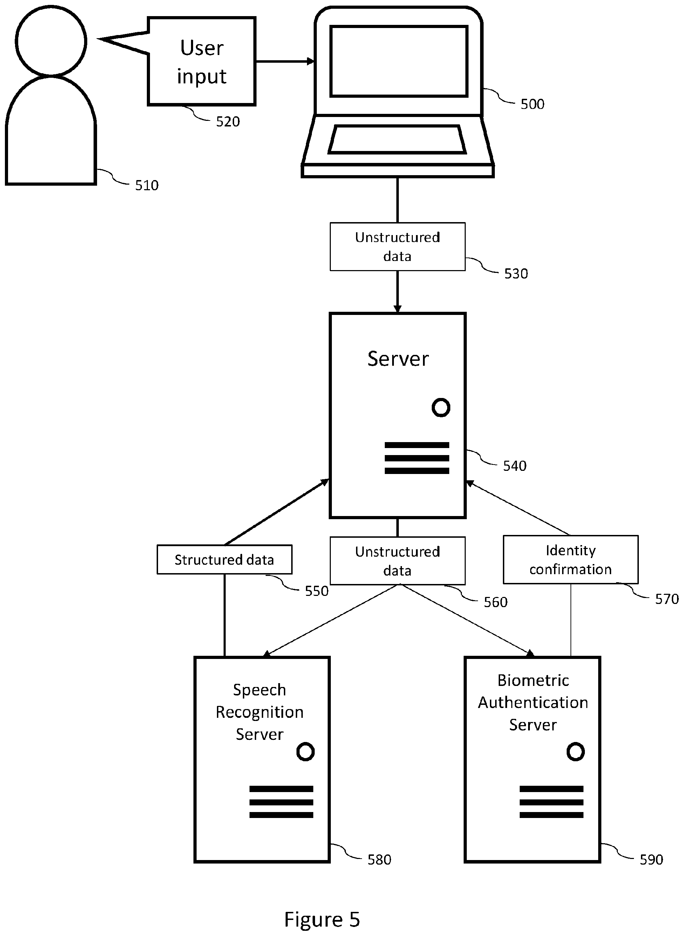

Figure 5 shows a diagram of an example of a user 510 of a client device 500 performing an input of speech data 530 in order to request a server 540 to perform a process.

The user 510 inputs the speech data 530 which is received by the client device 500 and transmitted, by the client device 500, to the server 540. Alternatively, the speech data 530 may be a handwritten input, a video input or any other input of unstructured data by a user. The unstructured data 430 may be contained in a file. The unstructured data 530 may be contained in web browser request or a mobile application request as described above for example. The unstructured data 430 may be contained in a transaction. The unstructured data 430 may relate to details of an online transaction, for example.

The speech data 530 is transmitted by the server 540 to a speech recognition server 580 and a Biometric Authentication Server 590. Alternatively, the server 540 may perform all of the processing without designating any tasks to external devices, as described with reference to Figure 3.

The speech processing server 580 extracts structured input data from the speech data 530. To perform the extraction, the speech recognition server 580 may convert the speech data 530 into text data, from which the structured input data 550 can be extracted; it may be, for example, that the speech recognition server 580 extracts information from the text data and then converts the extracted information into the structured input data 550. The speech recognition server 580 may convert the speech data 530 into text data using Artificial Intelligence (Al) software or may use speech recognition software. The speech processing server 580 then transmits the structured input data 550 to the server 540.

Upon receiving the speech data 530, the biometric authentication server 590 analyses the speech data 530 to determine whether the user 510 who input the unstructured data 530 corresponds to an authorised user. The Biometric authentication server 590 may compare the speech data to a prestored sample of the authorised data. The sample may be recorded by the user upon registration with a service provided by the server 540. The sample may be stored in a database of the server 540 or may be stored in an external server.

The biometric authentication server 590 engine determines whether the speech data matches the prestored sample of the authorised user. The Biometric authentication server 590 may use continuous voice biometrics to confirm whether the speech data matches the sample of the authorised user. The server 590 may use continuous voice biometrics to confirm whether the entire speech data or, alternatively, the entirety of a designated portion of the speech data, matches the sample of the authorised user, as described with reference to Figure 3.

The biometric authentication server engine 590 transmits an indication 570 of whether the user 510 has been determined to be the authorised user to the server 540. The indication 570 may confirm that the user 510 is the authorised user or may indicate that the speech sample does not match any samples of authorised user, indicating that the unstructured speech data has been altered by an unauthorised third party. If the indication 570 indicates that any part of the speech sample or a designated portion of the speech sample does not match any samples of authorised users, the server 540 may refuse the request of the user 510 to perform the process and may transmit a message to the client device 500 of the user indicating that the request has been declined. The message may also indicate to the user of the client device that it is likely that the speech data has been tampered with.

If it is determined by the biometric authentication server engine 590 that the user 510 corresponds to the authorised user, the server 540 executes the requested process based on the extracted content of the structured input data.

Additionally, if it has been determined that the user 510 is the authorised user and the process based on the content of the structured input data has been executed, the server 540 may also transmit a message to the client device 500. The message may contain a confirmation of the identity of the user 510 and may also contain details of the process which was executed.

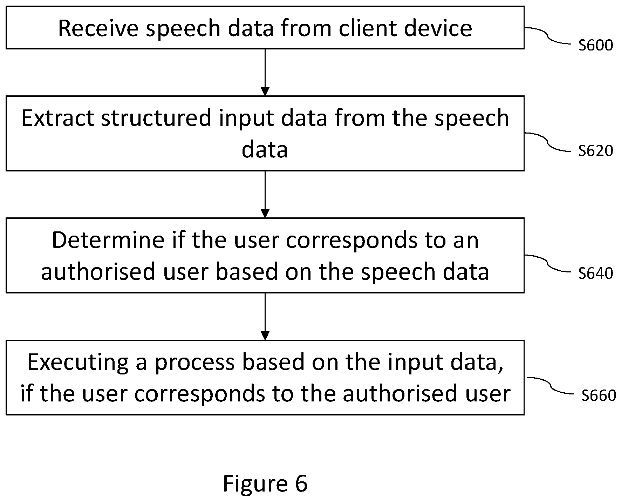

Figure 6 shows a flowchart showing a method for verifying input data performed by a server. In step S600, the server receives speech data from a client device. The speech data is received by the client device; the user inputs a voice input which is transmitted as speech data by the client device to the server. Alternatively, the speech data may be a different sort of unstructured data, such as a handwritten input, video input, or the like. The unstructured data 430 may be contained in a file. The speech data is received in a request originating from a web browser or a mobile application for example. For example, the speech data may be contained in a HTTP request, a HTTPS request, an FTP request, a WebSocket request, a SIP request, a WebRTC request or some other message format used to transmit data between a web browser application and a server or between a mobile application and a server. The unstructured data 430 may be contained in a transaction. The unstructured data 430 may relate to details of an online transaction, for example.

In step S620, the server extracts structured input data from the speech data. This may be performed by the server, through the use of speech recognition software which may convert the speech data into text data. The server may convert the speech data into text data using speech recognition software. The server may then extract the structured input data from the text data by extracting information from the text data and converting it into the structured input data. Alternatively, the server may extract the structured input data through the use of Artificial Intelligence (Al) software.

Alternatively, the server may designate this step of the method to a separate server, such as a speech recognition server. The server may then transmit the speech data to the speech recognition server, which may perform step S620, and may subsequently transmit the structured input data to the server.

In step S640, the server determines, based on the speech data, whether the user who input the speech data corresponds to an authorised user. The authorised user may be a user that has previously used the service or may be a user that is registered in a database. The determination may comprise a comparison of the speech data with prestored speech data attributed to the authorised user; the input speech data may be compared with the prestored speech data of the authorised user that user is claiming to be.

In step S660, if it is determined that the user is the authorised user, the server executes a process based on the structured input data extracted from the text data.

Alternatively, the server may transmit the speech data to a Biometric authentication server which may determine whether the user is the authorised user, as described with reference to Figure 4. Alternatively, the server may transmit the speech data to the Biometric authentication server as well as a speech recognition server, wherein the Biometric authentication server may determine whether the user is the authorised user and the speech recognition engine may extract the structured input data from the speech data, as described with reference to Figure 5.

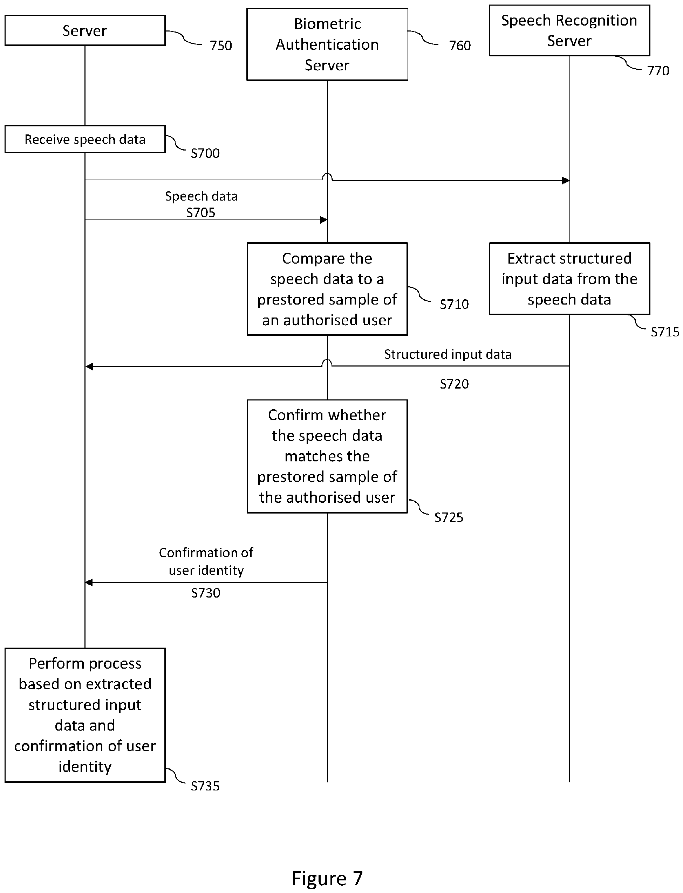

Additionally, if it has been determined that the user is the authorised user and the process based on the content of the extracted structured input data has been executed, the server may transmit a message to the client device. The message may contain a confirmation of the identity of the user and may also contain details of the process which was executed. Figure 7 shows a diagram of an example of the interactions between a server 750, a biometric authentication server 760 and a speech recognition server 770 while performing a method of verifying input data.

In step S700, the server 750 receives speech data from a client device. The speech data is received by the client device; the user inputs a voice input which is transmitted as speech data by the client device to the server 750. Alternatively, the speech data may be a different sort of unstructured data, such as a handwritten input, a video input, or the like. The unstructured data 430 may be contained in a file. The speech is received in a request originating from a web browser or a mobile application for example. For example, the speech data may be contained in a HTTP request, a HTTPS request, an FTP request, a WebSocket request, a SIP request, a WebRTC request or some other message format used to transmit data between a web browser application and a server or between a mobile application and a server. The unstructured data 430 may be contained in a transaction. The unstructured data 430 may relate to details of an online transaction, for example.

In step S705, the server 750 transmits the speech data to the Biometric authentication server 760 and the speech recognition server 770. Alternatively, the server 750 may transmit the speech data to only one external server which may carry out the duties of both the biometric authentication server 760 and the speech recognition server 770. Alternatively, the server 750 transmit the speech data to only either the biometric authentication server 760 or the speech recognition server 770 and the server 750 may then carry out the duties of either the speech recognition server 770 or the biometric authentication server 760.

In step 710, the biometric authentication server compares the speech data to a prestored sample of an authorised user. The sample may be recorded by the user upon registration with a service provided by the server 750. The sample may be stored in a database of the server 750 or the Biometric authentication server or may be stored in an external server.

In step S715, the biometric authentication server 760 determines whether the speech data matches the prestored sample of the authorised user. The biometric authentication server 760 may use continuous voice biometrics to confirm whether the speech data matches the sample of the authorised user. The server 760 may use continuous voice biometrics to confirm whether the entire speech data or, alternatively, the entirety of a designated portion of the speech data, matches the sample of the authorised user, as described with reference to Figure 3.

In step S720, the speech recognition server 770 extracts structured input data from the speech data. To perform the extraction, the speech recognition server 770 may convert the speech data into text data, from which the structured input data can be extracted; it may be that the speech recognition server 770 extracts information from the text data and then converts it into the structured input data. The speech recognition server 770 may convert the speech data into text data using Artificial Intelligence (Al) software or may use speech recognition software.

In step S725, the speech recognition server 770 transmits the structured input data to the server 750.

In step S730, the biometric authentication server 760 transmits an indication of whether the user has been determined to be the authorised user to the server 750. The indication may confirm that the user is the authorised user or may indicate that the speech sample does not match any samples of authorised users, indicating that the unstructured speech data has been altered by an unauthorised third party. If the indication indicates that the speech sample does not match any samples of authorised users, the server 750 may refuse the request of the user to perform the process and may transmit a message to the client device of the user indicating that the request has been declined. The message may also indicate to the user of the client device that it is likely that the speech data has been tampered with. In step S735, if it has been determined that the user is the authorised user, the server 750 executes a process based on the extracted structured input data.

Additionally, if it has been determined that the user is the authorised user and the process based on the content of the extracted input data has been executed, the server 750 may transmit a message to the client device. The message may contain a confirmation of the identity of the user and may also contain details of the process which was executed.

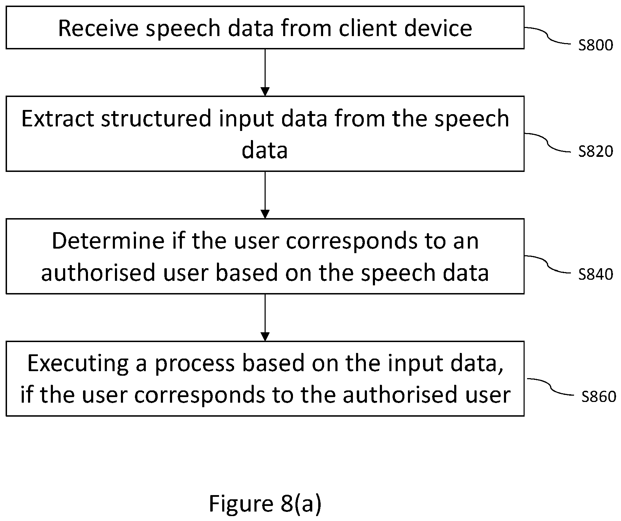

Figure 8(a) shows a flowchart showing a method for verifying input data performed by a server.

Prior to performance of the method described in relation to Figure 8(a), the user has previously used the service provided by the server or has registered with the service. For example, during a registration process, the user speaks one or more phrases. These are stored as prestored samples of unstructured data corresponding to the user. In this example, the phrase is "Sort Code ...... and Account Number........", and is spoken multiple times, with a different set of digits in the locations "....." each time. For example, the user may speak the phrase three or four times during the registration process, with the digits changed each time. These speech data signals are provided to the server, for example through a web-browser or app, by calling a specified telephone number or by sending a voice message to a specified telephone number. In some examples, these speech data signals are provided to a Biometric authentication server. A voice template based on the set of speech data signals is generated and stored, together with information identifying the user. The phrase comprises one or more pre-determined text sequences, also referred to as reference phrases. In this example, the text comprises a first part which corresponds to a first pre-determined text sequence (or first reference phrase) "Sort code", a second part which corresponds to a sequence of six digits, a third part which corresponds to a second pre-determined text sequence (or second reference phrase) "and Account Number", and a fourth part which corresponds to a sequence of eight digits.

In step S800, the server receives speech data from a client device. The speech data is received by the client device; the user inputs a voice input which is transmitted as speech data by the client device to the server. The speech data may be contained in a file. The speech data is received in a request originating from a web browser or a mobile application for example. For example, the speech data may be contained in a HTTP request, a HTTPS request, an FTP request, a WebSocket request, a SIP request, a WebRTC request or some other message format used to transmit data between a web browser application and a server or between a mobile application and a server. The speech data may be contained in a transaction. The speech data may relate to details of an online transaction, for example.

In step S820, the server extracts structured input data from the speech data. This may be performed by the server, through the use of speech recognition software which may convert the speech data into text data. The server may convert the speech data into text data using speech recognition software. The server may then extract the structured input data from the text data by extracting information from the text data and converting it into the structured input data. Alternatively, the server may extract the structured input data through the use of Artificial Intelligence (Al) software. Alternatively, the server may designate this step of the method to a separate server, such as a speech recognition server. The server may then transmit the speech data to the speech recognition server, which may perform step S820, and may subsequently transmit the structured input data to the server.

In step S840, the server determines, based on the speech data, whether the user who input the speech data corresponds to an authorised user. In some examples, the server may transmit the speech data to a Biometric authentication server which may determine whether the user is the authorised user, as described with reference to Figure 4. Alternatively, the server may transmit the speech data to the Biometric authentication server as well as a speech recognition server, wherein the Biometric authentication server may determine whether the user is the authorised user and the speech recognition engine may extract the structured input data from the speech data, as described with reference to Figure 5.

In this example, the authentication process performed in S840 is at least partly text dependent. In other words, the authentication process uses one or more reference phrases, which correspond to pre-determined text sequences. The prestored sample used for the authentication process corresponds to the one or more reference phrases. The speech data received in step S800 also corresponds to the one or more reference phrases.

In this example, the speech data received in step S800 comprises the phrase "Sort code 123456 and account number 12345678". The speech data comprises a first portion which corresponds to a first pre-determined text sequence (or first reference phrase) "Sort code", a second portion which corresponds to a sequence of six digits, a third portion which corresponds to a second pre-determined text sequence (or second reference phrase) "and Account Number", and a fourth portion which corresponds to a sequence of eight digits. In other words, there is an overlap between the speech data received in S800 and the prestored sample, where the one or more reference phrases are contained in both in the same locations. One or more parts having a same format may also be contained in both the prestored sample and the speech data received in S800. The speech data is more likely to match the prestored sample when the speech data comprises the one or more reference phrases from the prestored sample.

In step S860, if it is determined that the user is the authorised user, the server executes a process based on the structured input data extracted from the text data. Additionally, if it has been determined that the user is the authorised user and the process based on the content of the extracted structured input data has been executed, the server may transmit a message to the client device. The message may contain a confirmation of the identity of the user and may also contain details of the process which was executed.

In this example, the voice biometric analysis is at least partly text dependent, meaning that one or more pre-determined (or reference) phrases are used. Voice information is extracted from the speech data and compared to a stored template. The speech data corresponds to one or more reference phrases which are the same as those which were used during registration of the user to generate the stored voice template. In this example, during registration, the user repeatedly speaks the same phrase using different digits. Since part of the phrase spoken in the speech data is the same as part of the phrase used to generate the voice template during registration, greater accuracy of the voice biometric authentication is obtained compared to a case where the same amount of only newly generated content is requested. Using the same specific phrase during registration and during S840 allows for greater accuracy and chance of successful authentication.

In this example, an at least partly text dependent stored voiceprint is used. The registration process is at least partly text-dependent. In this example, the registration process is based on the static phrases "Sort Code" and "and Account Number". In this example, the entire speech data received in S800 is used for a single authentication.

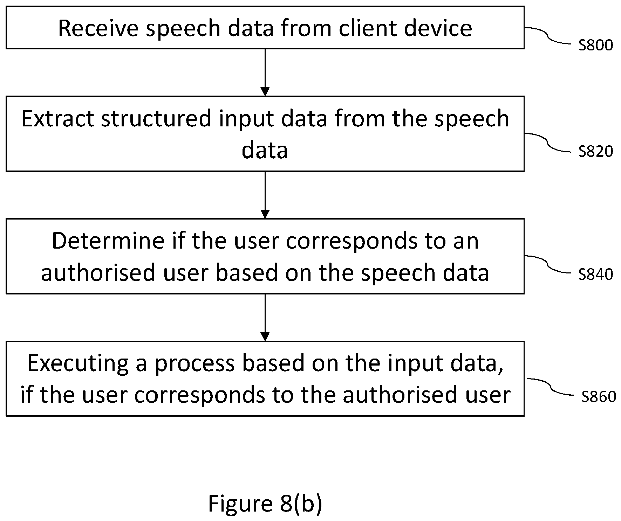

Figure 8(b) shows a flowchart showing a method for verifying input data performed by a server.

Prior to performance of the method described in relation to Figure 8(b), the user has previously used the service provided by the server or has registered with the service. For example, during a registration process, the user speaks a requested phrase. In this example, the requested phrase is "Sort Code ...... and Account Number ........", and is spoken multiple times, with a different set of digits in the locations "....." each time. For example, the user may speak the phrase three or four times, with the digits changed each time. These speech data signals are provided to the server, for example through a web-browser or app, by calling a specified telephone number or by sending a voice message to a specified telephone number. In some examples, these speech data signals are provided to a Biometric authentication server. A voice template based on the set of speech data signals is generated and stored, together with information identifying the user. The requested text comprises one or more static parts and one or more dynamic parts. In this example, the text comprises a first part which is a static part and corresponds to a first pre-determined text sequence "Sort code", a second part which is a dynamic part and corresponds to a sequence of six digits, a third part which is a static part and corresponds to a second pre-determined text sequence "and Account Number" and a fourth part which is a dynamic part and corresponds to a sequence of eight digits. The server, or Biometric authentication server in some examples, stores the first pre-determined text sequence, the second pre-determined text sequence and the order of the static and dynamic parts.

In step S800, the server receives speech data from a client device. The speech data is received by the client device; the user inputs a voice input which is transmitted as speech data by the client device to the server. The speech data is received in a request originating from a web browser or a mobile application for example. For example, the speech data may be contained in a HTTP request, a HTTPS request, an FTP request, a WebSocket request, a SIP request, a WebRTC request or some other message format used to transmit data between a web browser application and a server or between a mobile application and a server. The speech data may be contained in a transaction. The speech data may relate to details of an online transaction, for example.

In step S820, the server extracts structured input data from the speech data. This may be performed by the server, through the use of speech recognition software which may convert the speech data into text data. The server may convert the speech data into text data using speech recognition software. The server may then extract the structured input data from the text data by extracting information from the text data and converting it into the structured input data. Alternatively, the server may extract the structured input data through the use of Artificial Intelligence (Al) software. Alternatively, the server may designate this step of the method to a separate server, such as a speech recognition server. The server may then transmit the speech data to the speech recognition server, which may perform step S820, and may subsequently transmit the structured input data to the server.

In step S840, the server determines, based on the speech data, whether the user who input the speech data corresponds to an authorised user. The authorised user may be a user that has previously used the service or may be a user that is registered in a database. The determination may comprise a comparison of the speech data with prestored speech data attributed to the authorised user; the input speech data may be compared with the prestored speech data of the authorised user that user is claiming to be. In some examples, the server may transmit the speech data to a Biometric authentication server which may determine whether the user is the authorised user, as described with reference to Figure 4. Alternatively, the server may transmit the speech data to the Biometric authentication server as well as a speech recognition server, wherein the Biometric authentication server may determine whether the user is the authorised user and the speech recognition engine may extract the structured input data from the speech data, as described with reference to Figure 5.

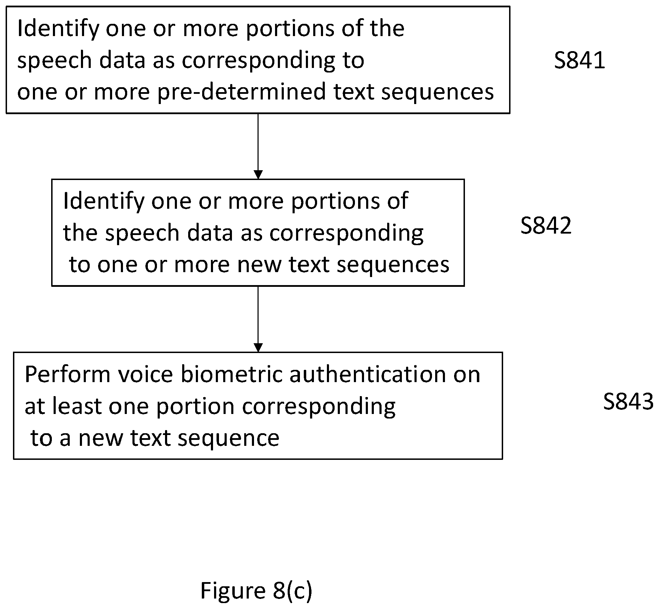

Figure 8(c) is a flowchart showing an example of a method of determining if the user corresponds to an authorised user based on the speech data which may be carried out in S840.

The method uses a prestored sample of unstructured data corresponding to the authorised user. For example, the prestored sample is converted into a biometric model or template and the stored template used in S840. In this example, the prestored sample, and therefore the template, is associated with the text "Sort Code ...... and Account Number ........", as described previously.

In S841, one or more portions of the speech data received in S800 are identified as corresponding to one or more pre-determined text sequences. In this example, a first pre-determined text sequence is "Sort Code" and a second pre-determined text sequence is "and Account Number". In S841, the speech data is analysed to identify a portion that corresponds to the first pre-determined text sequence - this portion will be referred to as the first portion. The speech data is also analysed to identify a portion that corresponds to the second pre-determined text sequence - this portion will be referred to as the third portion. In other words, the speech data is analysed to identify a first portion in which the first pre-determined text sequence is spoken and a third portion in which the second pre-determined text sequence is spoken. A portion is identified for each pre-determined text sequence associated with an identified voice template for the user in this step.

In this example, the one or more portions of the speech data are identified using a speech recognition based method. For example, a trained speech recognition algorithm based on a neural network or Hidden Markov Model may be used in S841. The speech data is taken as input to the ASR module. The ASR output may comprise the most probable text hypothesis corresponding to speech data. Timing information corresponding to the point in the speech data corresponding to the start and end of each word in the hypothesis is also generated by the automatic speech recognition algorithm. The speech recognition may be performed by the Biometric authentication server for example. Alternatively, where a speech recognition server is used, information from the speech recognition server may be provided to the Biometric authentication server in S841.

The timing information is used to identify the one or more portions of the speech data corresponding to the one or more pre-determined text sequences. In this example, the timing information is used to identify the end of the first portion in the speech data. The end of the first portion corresponds to the point in the speech data identified in the timing information as the end of the final word in the first pre-determined text sequence. The portion of the speech data from the start of the speech data to this point is identified as the first portion. The timing information is also used to identify the start and end of the third portion in the speech data. The start of the third portion corresponds to the point in the speech data identified in the timing information as the start of the first word in the second pre-determined text sequence. The end of the third portion corresponds to the point in the speech data identified in the timing information as the end of the last word in the second pre-determined text sequence.

In S842, one or more portions of the speech data corresponding to one or more new text sequences are identified. In this example, the one or more remaining portions of the speech data are identified in this step. A second portion of the speech data is identified as the portion of the speech data between the first portion and the third portion. A fourth portion of the speech data is identified as the portion after the third portion. It is known where the static and dynamic components are in the requested text phrase, in other words the order of these components is known, allowing the new portions to be identified. Alternatively, the one or more portions of the speech data corresponding to one or more new text sequences are identified based on a known structure of the one or more new text sequences, for example by searching for a sequence of digits in the ASR output for example.

In S843, voice biometric authentication is performed on one or more portions of the speech data identified in S842 as corresponding to one or more new text sequences. In this example, voice information extracted from just the second portion and fourth portion of the speech data is analysed against a stored template, to provide a voice biometric score indicating the likelihood that the second portion and the fourth portion of the speech data corresponds to the stored template. By performing independent biometric analysis of the one or more portions of the speech data corresponding to new text sequences, it can be determined whether these portions are spoken by a human imposter. The one or more portions of the speech data corresponding to new text sequences may correspond to text data that relates to sensitive aspects of a transaction (for example account number or payment amount).

Voice biometric authentication may use an algorithm that generates a digital representation of the distortion of sound caused by the speaker's physiology from speech data. This representation comprises a series of values, representing voice information. The values may be represented as float values, which are stored in a vector, referred to here as a voice information vector. The voice information comprises information specifying various characteristics of the user voice, such as pitch, cadence, tone, pronunciation, emphasis, speed of speech, and accent. The unique vocal tract and behaviour of each person results in distinct voice information that allows verification of the person using the stored template. The stored template is a vector comprising a set of values which were previously extracted from speech received from the registered user. A portion of the speech data is taken as input to the algorithm. The voice information generated for the portion of the speech data is then compared to the stored voice information corresponding to the identified user to generate a voice biometric score. The score is a single value indicating the similarity between the stored template voice information vector of values and the voice information vector extracted from the portion of the speech data.

In some examples, S843 may further comprise performing independent voice biometric analysis on the one or more portions of the speech data corresponding to pre-determined text sequences. In this manner, an authentication technique is provided which evaluates static and dynamic components of the speech data independently of each other. Each component part of the speech data is evaluated for biometric authentication. In this way, if any portion fails, the authentication fails. By performing independent analysis of various segments of a spoken phrase, it can be determined whether the same speaker is speaking the entire phrase, or whether any or all of the phrase is spoken by a human imposter.

In step S860, if it is determined that the user is the authorised user, the server executes a process based on the structured input data extracted from the text data. Additionally, if it has been determined that the user is the authorised user and the process based on the content of the extracted structured input data has been executed, the server may transmit a message to the client device. The message may contain a confirmation of the identity of the user and may also contain details of the process which was executed.

Although in this example, the one or more portions corresponding to the one or more pre-determined text sequences are identified first, in other examples, the one or more portions corresponding to the one or more new text sequences are identified first. For example, the one or more portions of the speech data corresponding to one or more new text sequences are identified based on a known structure of the one or more new text sequences, for example by searching for one or more sequences of digits of a known length in the ASR output for example.

Although in this example, automatic speech recognition is used for identifying the different portions, alternative methods may be used to identify the portions. For example, time delimiting may be used for identifying the portions of the speech data. Since it is known where the static and dynamic components are in the requested phrase, and how long the static components take to speak, time delimiting can be used for identifying the different components. The order of the parts is known. It can also be determined how long the static parts (i.e. the parts corresponding to pre-determined text sequences) take to speak. Time delimiting is then performed on the audio signal to identify the respective portions. For the static parts (the first part and third part), the expected time it takes to speak the text may be determined in advance and stored. Since the static text is the same for every request, the same expected time can be used to identify the static portion(s). For example, an average time to speak the pre-determined text sequence may be determined from the audio signals provided by the user during the registration process. This length of time is then stored.

In this example, authentication which is robust to imposter attacks based on a combination of spoken and replayed speech is provided for example. Evaluating a dynamic component of the speech data independently avoids an "averaging" of the voice information for two or more voices for example. To mitigate against an audio injection of the actual sort code and account number, the speech data received in S800 is compared to an at least partly text-dependent template. Different portions of spoken audio are compared to the original enrolled template.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method of processing input data (520) by a server (540), the method comprising:
receiving, at the server, speech data from a client device (500) in response to a request from a web browser application or a mobile application for transaction information;
extracting structured input data from the speech data (530), wherein the extracted structured input data is transaction information (550);
determining if the speech data corresponds to an authorised user (510); and
if the speech data corresponds to an authorised user, executing a transaction based on the extracted transaction information.

2. The method of claim 1, wherein if the speech data does not correspond to an authorised user, transmitting a message to the client device that indicates that the speech data may have been altered.

3. The method of claim 1 or claim 2, wherein extracting structured input data from the speech data comprises:
converting the speech data into text data; and
extracting the structured input data from the text data.

4. The method of any preceding claim, wherein determining if the speech data corresponds to an authorised user comprises:
comparing a designated portion of the speech data to a prestored sample of the authorised user, wherein the designated portion corresponds to the transaction information;
confirming whether the designated portion of the speech data matches the prestored sample of the authorised user; and
if the designated portion of the speech data matches the prestored sample of the authorised user, determining that the speech data corresponds to the authorised user.

5. The method of any one of claims 1-3, wherein determining if the speech data corresponds to an authorised user comprises:
comparing the entire speech data to a prestored sample of the authorised user;
confirming whether the entire speech data matches the prestored sample of the authorised user; and
if the entire speech data matches the prestored sample of the authorised user, determining that the speech data corresponds to the authorised user.

6. The method of claim 4 or claim 5, wherein the determining if the speech data corresponds to the authorised user is performed by a biometric authentication server (590).

7. The method of claim 6, wherein the biometric authentication server performs the determining if the speech data corresponds to the authorised user using Artificial Intelligence, Al, software.

8. The method of any one of claims 3 to 7, wherein extracting the structured input data from the speech data is performed by a speech recognition server (580).

9. The method of any one of claims 3 to 7, wherein the extracting the structured input data from the speech data is performed using speech recognition software.

10. The method according to any preceding claim, further comprising, if the speech data does not correspond to an authorised user, sending, to the client device, a notification that the input data may have been altered and that the process has not been executed.

11. A server (540) for processing input data, the server configured to perform the method according to any of claims 1 to 10.

12. The server of claim 11, wherein determining if the speech data corresponds to the authorised user further comprises:
transmitting the speech data to a biometric authentication server (590) which performs the determining; and
receiving, from the biometric authentication server, an indication of whether the speech data matches the prestored sample of the authorised user.

13. The server of claim 11 or 12, wherein extracting the structured input data from the speech data further comprises:
transmitting the speech data to a speech recognition server (580) which performs the extracting; and
receiving, from the speech recognition server, the text data.

14. A system for verifying input data, the system comprising the server according to any of claims 11 to 13 and a client device (500) configured to:
receive an input of speech data; and
transmit the speech data to the server.

15. A carrier medium comprising computer readable code configured to cause a computer to perform the method of any of claims 1 to 10.

## Patentansprüche

1. Verfahren zum Verarbeiten von Eingabedaten (520) durch einen Server (540), wobei das Verfahren Folgendes umfasst:
Empfangen von Sprachdaten von einer Client-Vorrichtung (500) an dem Server als Antwort auf eine Anforderung von einer Webbrowser-Anwendung oder einer mobilen Anwendung nach Transaktionsinformationen;
Extrahieren strukturierter Eingabedaten aus den Sprachdaten (530), wobei die extrahierten strukturierten Eingabedaten Transaktionsinformationen (550) sind;
Bestimmen, ob die Sprachdaten einem autorisierten Benutzer (510) entsprechen, und
falls die Sprachdaten einem autorisierten Benutzer entsprechen, Ausführen einer Transaktion auf der Grundlage der extrahierten Transaktionsinformationen.

2. Verfahren nach Anspruch 1, wobei, falls die Sprachdaten einem autorisierten Benutzer nicht entsprechen, eine Nachricht an die Client-Vorrichtung übertragen wird, die angibt, dass die Sprachdaten verändert worden sein könnten.

3. Verfahren nach Anspruch 1 oder 2, wobei das Extrahieren strukturierter Eingabedaten aus den Sprachdaten Folgendes umfasst:
Umwandeln der Sprachdaten in Textdaten; und
Extrahieren der strukturierten Eingabedaten aus den Textdaten.

4. Verfahren nach einem der vorhergehenden Ansprüche, wobei das Bestimmen, ob die Sprachdaten einem autorisierten Benutzer entsprechen, Folgendes umfasst:
Vergleichen eines bestimmten Abschnitts der Sprachdaten mit einer vorgespeicherten Probe des autorisierten Benutzers, wobei der bestimmte Abschnitt den Transaktionsinformationen entspricht;
Bestätigen, ob der bestimmte Abschnitt der Sprachdaten mit der vorgespeicherten Probe des autorisierten Benutzers übereinstimmt, und
falls der bestimmte Abschnitt der Sprachdaten mit der vorgespeicherten Probe des autorisierten Benutzers übereinstimmt, Bestimmen, dass die Sprachdaten dem autorisierten Benutzer entsprechen.

5. Verfahren nach einem der Ansprüche 1 bis 3, wobei das Bestimmen, ob die Sprachdaten einem autorisierten Benutzer entsprechen, Folgendes umfasst:
Vergleichen der gesamten Sprachdaten mit einer vorgespeicherten Probe des autorisierten Benutzers,
Bestätigen, ob die gesamten Sprachdaten mit der vorgespeicherten Probe des autorisierten Benutzers übereinstimmen, und
falls die gesamten Sprachdaten mit der vorgespeicherten Probe des autorisierten Benutzers übereinstimmen, Bestimmen, dass die Sprachdaten dem autorisierten Benutzer entsprechen.

6. Verfahren nach Anspruch 4 oder 5, wobei das Bestimmen, ob die Sprachdaten dem autorisierten Benutzer entsprechen, von einem biometrischen Authentifizierungsserver (590) durchgeführt wird.

7. Verfahren nach Anspruch 6, wobei der biometrische Authentifizierungsserver das Bestimmen, ob die Sprachdaten dem autorisierten Benutzer entsprechen, unter Verwendung einer Software für künstliche Intelligenz, AI, durchführt.

8. Verfahren nach einem der Ansprüche 3 bis 7, wobei das Extrahieren der strukturierten Eingabedaten aus den Sprachdaten durch einen Spracherkennungsserver (580) durchgeführt wird.

9. Verfahren nach einem der Ansprüche 3 bis 7, wobei das Extrahieren der strukturierten Eingabedaten aus den Sprachdaten unter Verwendung einer Spracherkennungssoftware durchgeführt wird.

10. Verfahren nach einem der vorhergehenden Ansprüche, das ferner, falls die Sprachdaten nicht einem autorisierten Benutzer entsprechen, Senden einer Benachrichtigung an die Client-Vorrichtung, dass die Eingabedaten verändert worden sein könnten und dass die Verarbeitung nicht ausgeführt wurde, umfasst.

11. Server (540) zum Verarbeiten von Eingabedaten, wobei der Server konfiguriert ist, um das Verfahren nach einem der Ansprüche 1 bis 10 durchzuführen.

12. Server nach Anspruch 11, wobei das Bestimmen, ob die Sprachdaten dem autorisierten Benutzer entsprechen, ferner Folgendes umfasst:
Übertragen der Sprachdaten an einen biometrischen Authentifizierungsserver (590), der das Bestimmen durchführt; und
Empfangen von dem biometrischen Authentifizierungsserver einer Angabe, ob die Sprachdaten mit der vorgespeicherten Probe des autorisierten Benutzers übereinstimmen.

13. Server nach Anspruch 11 oder 12, wobei das Extrahieren der strukturierten Eingabedaten aus den Sprachdaten ferner Folgendes umfasst:
Übertragen der Sprachdaten an einen Spracherkennungsserver (580), der das Extrahieren durchführt; und
Empfangen der Textdaten von dem Spracherkennungsserver.

14. System zum Verifizieren von Eingabedaten, wobei das System den Server nach einem der Ansprüche 11 bis 13 und eine Client-Vorrichtung (500) umfasst, die konfiguriert ist zum:
Empfangen einer Eingabe von Sprachdaten; und
Übertragen der Sprachdaten an den Server.

15. Trägermedium, das einen computerlesbaren Code umfasst, der konfiguriert ist, um einen Computer zu veranlassen, das Verfahren nach einem der Ansprüche 1 bis 10 durchzuführen.

## Revendications

1. Procédé de traitement de données d'entrée (520) par un serveur (540), le procédé comprenant :
la réception, au niveau du serveur, de données vocales en provenance d'un dispositif client (500) en réponse à une demande d'informations de transaction de la part d'une application de navigateur Internet ou d'une application mobile ;
l'extraction de données d'entrée structurées à partir des données vocales (530), dans lequel les données d'entrée structurées extraites sont des informations de transaction (550) ;
la détermination si les données vocales correspondent à un utilisateur autorisé (510) ; et
si les données vocales correspondent à un utilisateur autorisé, l'exécution d'une transaction sur la base des informations de transaction extraites.

2. Procédé selon la revendication 1, dans lequel, si les données vocales ne correspondent pas à un utilisateur autorisé, un message est transmis au dispositif client qui indique que les données vocales peuvent avoir été modifiées.

3. Procédé selon la revendication 1 ou 2, dans lequel l'extraction de données d'entrée structurées à partir des données vocales comprend :
la conversion des données vocales en des données de texte ; et
l'extraction des données d'entrée structurées à partir des données de texte.

4. Procédé selon l'une quelconque des revendications précédentes, dans lequel la détermination si les données vocales correspondent à un utilisateur autorisé comprend :
la comparaison d'une partie déterminée des données vocales à un échantillon pré-enregistré de l'utilisateur autorisé, dans lequel la partie déterminée correspond aux informations de transaction ;
le fait de confirmer si la partie déterminée des données vocales est ou n'est pas conforme à l'échantillon pré-enregistré de l'utilisateur autorisé ; et
si la partie déterminée des données vocales est conforme à l'échantillon pré-enregistré de l'utilisateur autorisé, la détermination que les données vocales correspondent à l'utilisateur autorisé.

5. Procédé selon l'une quelconque des revendications 1 à 3, dans lequel la détermination si les données vocales correspondent à un utilisateur autorisé comprend :
la comparaison de toutes les données vocales à un échantillon pré-enregistré de l'utilisateur autorisé ;
le fait de confirmer si toutes les données vocales sont ou ne sont pas conformes à l'échantillon pré-enregistré de l'utilisateur autorisé ; et
si toutes les données vocales sont conformes à l'échantillon pré-enregistré de l'utilisateur autorisé, la détermination que les données vocales correspondent à l'utilisateur autorisé.

6. Procédé selon la revendication 4 ou 5, dans lequel la détermination si les données vocales correspondent à l'utilisateur autorisé est réalisée par un serveur d'authentification biométrique (590).

7. Procédé selon la revendication 6, dans lequel le serveur d'authentification biométrique réalise la détermination si les données vocales correspondent à l'utilisateur autorisé en se servant d'un logiciel d'intelligence artificielle (AI).

8. Procédé selon l'une quelconque des revendications 3 à 7, dans lequel l'extraction des données d'entrée structurées à partir des données vocales est réalisée par un serveur de reconnaissance vocale (580).

9. Procédé selon l'une quelconque des revendications 3 à 7, dans lequel l'extraction des données d'entrée structurées à partir des données vocales est réalisée en se servant d'un logiciel de reconnaissance vocale.

10. Procédé selon l'une quelconque des revendications précédentes, comprenant en outre, si les données vocales ne correspondent pas à un utilisateur autorisé, l'envoi, au dispositif client, d'une notification que les données d'entrée peuvent avoir été modifiées et que le traitement n'a pas été exécuté.

11. Serveur (540) pour traiter des données d'entrée, le serveur étant configuré pour réaliser le procédé selon l'une quelconque des revendications 1 à 10.

12. Serveur selon la revendication 11, dans lequel la détermination si les données vocales correspondent à l'utilisateur autorisé comprend en outre :
la transmission des données vocales à un serveur d'authentification biométrique (590) qui réalise la détermination ; et
la réception, de la part du serveur d'authentification biométrique, d'une indication précisant si les données vocales sont ou ne sont pas conformes à l'échantillon pré-enregistré de l'utilisateur autorisé.

13. Serveur selon la revendication 11 ou 12, dans lequel l'extraction des données d'entrée structurées à partir des données vocales comprend en outre :
la transmission des données vocales à un serveur de reconnaissance vocale (580) qui réalise l'extraction ; et
la réception, de la part du serveur de reconnaissance vocale, des données de texte.

14. Système pour vérifier des données d'entrée, le système comprenant le serveur selon l'une quelconque des revendications 11 à 13 et un dispositif client (500) configuré pour :
recevoir une entrée de données vocales ; et
transmettre les données vocales au serveur.

15. Support comprenant un code lisible par ordinateur configuré pour amener un ordinateur à réaliser le procédé selon l'une quelconque des revendications 1 à 10.
